Europäisches Patentamt

European Patent Office

Office européen des brevets

(11) Publication number: **0 168 799**
A2

# (12) EUROPEAN PATENT APPLICATION

(21) Application number: 85108825.2

(22) Date of filing: 15.07.85

(51) Int. Cl.⁴: **B 29 C 45/14**, B 29 C 45/26

(30) Priority: 16.07.84 IT 2190584

(43) Date of publication of application: 22.01.86
Bulletin 86/4

(84) Designated Contracting States: AT BE CH DE FR GB LI LU NL SE

(71) Applicant: F.LLI TOMASELLO S.r.l., S.S.114 Km 5,400, I-98020 Tremestieri (Messina) (IT)

(72) Inventor: Tomasello, Letterio, Via Giardinaggio Isolato 47, Messina (IT)
Inventor: Tomasello, Francesco, S.S. 114 Km. 5,400, I-98020 Tremestieri (IT)
Inventor: Tomasello, Giovanni, S.S. 114 Km. 5,400, I-98020 Tremestieri (IT)

(74) Representative: Lecce, Giovanni, Dott. Giovanni Lecce & C. S.r.l. Via G. Negri 10, I-20123 Milano (IT)

(54) Process and device for producing artificial leaves.

(57) This invention refers to an improved process for producing artificial leaves, where the artificial branched leaf-supporting stem, connected to the so-called «edge» or «blade» or the leaf, is made in a single piece, in plastic material, with brnachings directly welded to the relevant edge or blade.
The device for implementing such process includes at least one couple of composite moulds, selectively replaceable, which reproduce the negative impression of the single or multi-branched stem of any artificial leaf desired and are fitted with holes connected to a vacuum circuit.

- 1 -

# PROCESS AND DEVICE FOR PRODUCING ARTIFICIAL LEAVES

This invention generally refers to an improved process for producing artificial leaves. More specifically, this invention refers to an improved process for producing artificial leaves incorporating a branched leaf-supporting stem, connected to the relevant "edge" or "blade" of the leaf.

This invention also concerns the device, namely a composite mould, with replaceable parts, for producing such complete artificial leaves, above all for ornamental purposes, particularly leaves with single or multi-branched stems for artificially reproducing any kind of foliage. It has for some time been technically possible to industrially produce artificial plants for mainly decorative purposes, imitating various flowers, leaves with relevant stems, generally considered to be classed as ornamental flowers and plants.

It is also known, in the technology of the sector, that each of the leaves of such artificial plants includes, as already said, a branched dorsal stem which holds the relevant "edges" or "blades" of the actual leaves. And it is also known that the present production of artificial plants and in particular of the respective branched leaf-supporting stem, makes wide use of plastic materials of various types and composition. According to the present technique, such stem is made in several parts which are subsequently interconnected either by welding or by embedding. The edge or blade of the leaf is subsequently applied to the stem by welding.

All these various operations necessitate numerous handlings, and the use of several injection machines and a combination of various moulds

- 2 -

which in turn must be individually connected to a corresponding variety of auxiliary parts for the production of these stems or dorsals. All this considerably affects the cost of the artificial foliage being produced.

Moreover, the artificial item produced does not make it possible to selectively obtain, per size or nervature, the different leaves and relevant leaf-supports of the variety of plants naturally available.

The improved process according to this invention makes it possible to achieve a higher qualitative level of the end commercial product, and moreover to limit the number of operations required.

According to this invention the stem, properly called the leaf-support, is realized in a single operation with the use of a single injection machine incorporating a device made up of a composite mould with various interchangeable parts according to the type of plant which is to be artificially reproduced. According to the process envisaged with this invention, the part destined to form the edge or blade of the leaf, is positioned on the mould, usually stationary, subsequently proceding with the injection phase with varying formation of the stem according to the plant to be artificially reproduced. By this process, the stem is characteristically realized in a single piece, with all its branchings which are directly injection, the edge or blade of the leaf is held in position on the mould by applying a sub-atmospheric pressure, or a "whirlpool" effect.

Additionally, the improved process under this invention may include a superficial sand-blasting or shagreening on the leaf-supporting stem. Moreover, this stem may be "reinforced" with wire, in particular made of semisteel iron which makes it possible to attribute to the leaf-supporting

- 3 -

stem the most advantageous prerogatives of flexibility and pliability.

The device for realizing the above process is made up of a composite mould with separable and selectively replaceable parts, connected to a machine for injecting plastic materials, usually thermoplastic. These parts are preferably two couples, each including a male and a female section, which can both be replaced or just one couple may be replaced with another, according to the type of leaf-support desired. The couple not destined to form the branching is predisposed in such a way as to produce the so-called "cone" or "back" of the leaf-support. With the said combination various types of multi-branch leaf-support may be formed by replacing just one couple of moulds, always maintaining the characteristic possibility of producing the artificial plant or relevant foliage in just one part with the preselected polymeric material.

The parts of each couple are positionally interconnected by means of pins or other temporary or permanent fastenings.

The same possibilities for relevant positioning and/or jointing may be exploited also as regards the familiar device used for executing the material injection phase.

According to this invention, on at least one couple of moulds holes are predisposed, connected by means of suitable pipes to a sub-atmospheric pressure source, to obtain the said whirlpool effect which guarantees the positioning of the blade which during the injection phase is secured to the mould.

Moreover, the device includes special circuits for a fluid, liquid or gaseous, to circulate, for cooling the couples of moulds.

- 4 -

These and other more specific characteristics of the improved process of the device for producing artificial leaves as per this invention may be better explained by the following detailed description which refers to the attached drawings, which show a chosen illustrative but not limitative example of implementation of this invention, where:

Figure 1: shows the schematic view of a complete leaf including the branched stem structurally connected to the relevant blade and realized in a single unit, in which a wire reinforcement is buried;

Figure 2: shows the schematic view of a part of the leaf in fig. 1, seen from the opposite side;

Figure 3: shows, in enlarged form, the schematic view of the cross-section indicated by III-III in fig. 2;

Figure 4: shows the flat schematic view of the female composite part of a mould; and

Figure 5: shows the schematic view of the opposite or male element of the mould in fig. 4.

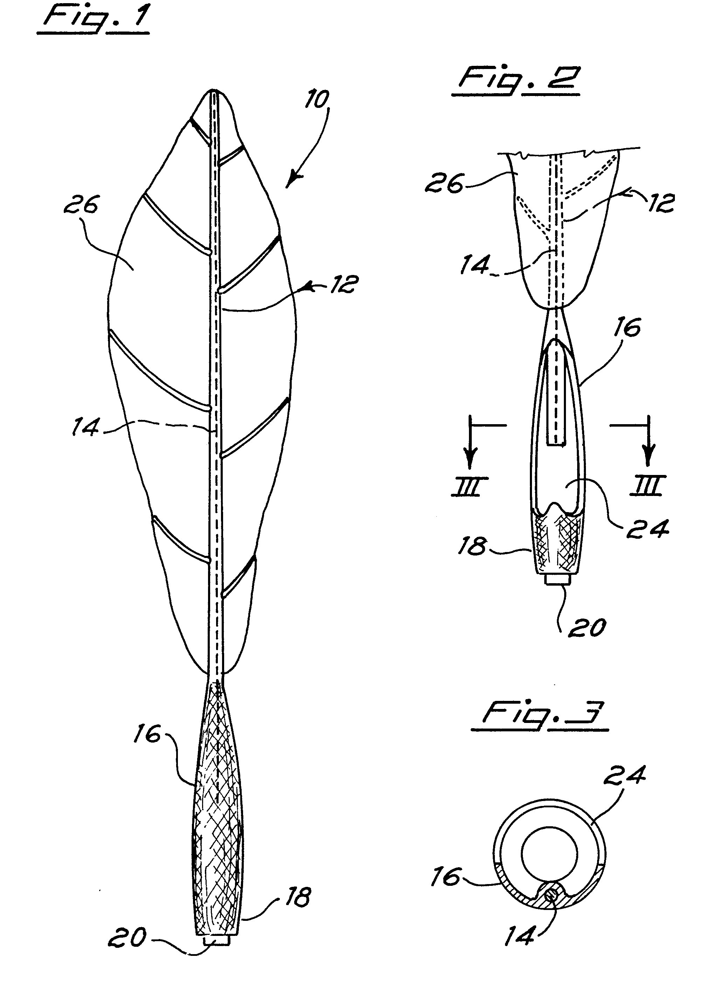

With the special reference to figs. 1 and 2 of the attached drawings, the artificial leaf 10 includes a branched stem 12 and an edge or blade 26 which have been welded. The stem 12 extends beyond the base of the leaf 10 by a section 16 with larger diameter commonly called a "cone", which incorporates, at its free end 18, a piece 20 which is able to slot into a suitable part (not shown) engraved in the trunk of an artificial plant. A wire 14, in semisteel material, is incorporated in the stem 12 and in the section 16 with larger diameter.

The section 16 with larger diameter of the stem 12 has an opening 24

- 5 -

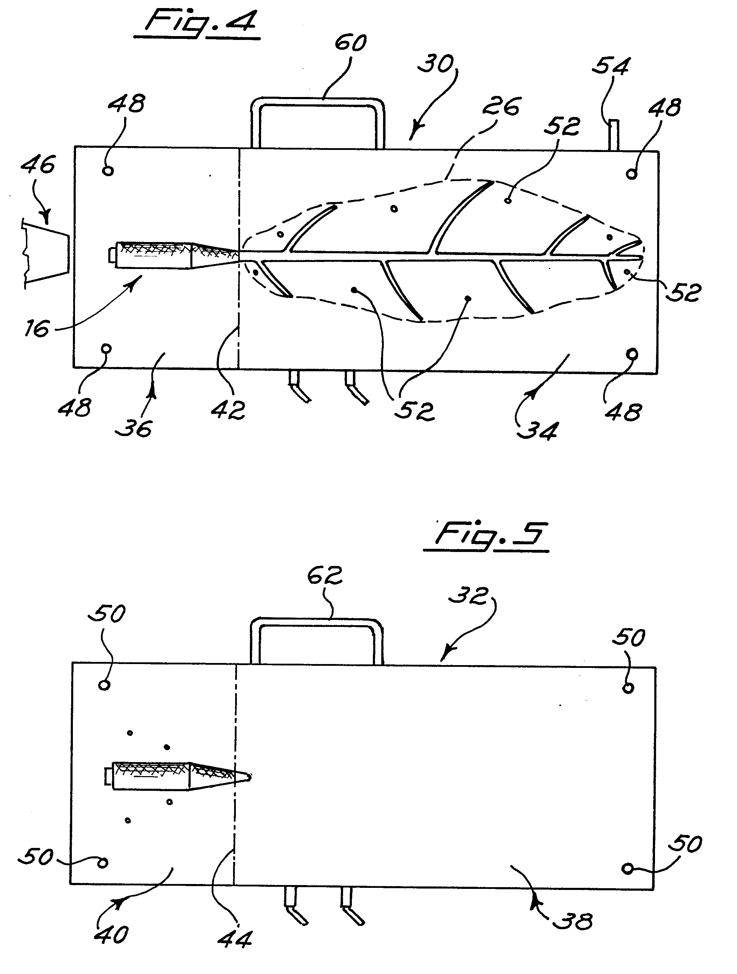

(see fig. 3) along the edge of the circle to enable the possible insertion of a similar leaf 10, in the formation of a more elaborate plant.

According to this invention, the branched stem 12 is produced in a single unit in plastic material and by means of known injection processes, this branched stem being welded, during its formation, to the edge or blade 26 and incorporating the said wire 14. The formation of the branched stem 12 is obtained by using the device (figs. 4 and 5) made up of a female composite mould generally indicated with 30 and another composite mould, male, 32. Each mould 30 and 32 is composed of at least two parts 34 and 36, and respectively of two coherent parts 38 and 40, which can be joined, for example, at the level indicated by 42 and 44 respectively. The couples of moulds are operatively connected to a known injection machine partially shown (46) in fig. 4.

The female section 34 of the mould 30 reproduces the negative impression of the multi-branched stem 12 in fig. 1, whereas the connected but separable section 36 in turn reproduces the portion of the stem with larger diameter or "cone" 16.

Parts 30 and 32 of the mould are positionally fastened together by means of pins 48 located on the female section 34-36, which fit into corresponding holes 50 on the male section 38-40. Moreover, at least through the part of the female element 34 corresponding to the leaf, holes 52 have been applied through which a depression is introduced in order to provide the "whirlpool" effect. In this way, with the mould closed, the edge or blade 26 (indicated by the dotted line in fig. 4) is immobilized against mould section 34 during the formation of the multi-branched stem 12 the

- 6 -

branches of which are welded directly onto the edge, thus creating the desired foliage.

The said holes 52 are connected at the inlet 54 by a multiple suction circuit which enables the said "whirlpool" action and immobilization of the edge 26 of the artificial leaf.

This suction circuit may even be inserted at various positions of mould sections 30 and 32. In both sections 30 and 32 of the mould, circuits 60 and 62 are applied through which a cooling fluid is made to circulate.

Finally, on sections 36 and 40 of the mould a superficial sand-blasting or shagreening may be applied to give the surface of the "cone" 16, resulting from the extrusion phase, an appearance similar to that which characterizes the surfaces or plants.

The improved process, and the composite device for the application of the process, have been described and illustrated only as examples which are not limitative; hence changes, modifications and variations may be made, with the application of innovative concepts under this invention, without moving outside its protected framework.

- 7 -

CLAIMS

1. Process for the production of an artificial leaf in plastic material incorporating a branched leaf-supporting stem connected to the edge or blade of the leaf, characterized by the fact that the stem is carried out in a single unit and its branches are welded, during formation, to the relevant edge or blade.

2. Process according to Claim 1, characterized by the fact that it includes the phases of positioning in a mould the part destined to form the edge or blade of the leaf and subsequently injecting the plastic material to form the stem and its branches.

3. Process according to Claim 2, where the part destined to form the edge or blade of the leaf is positioned by "whirlpooling".

4. Process according to Claim 1, where the stem is extended beyond the base of the leaf by a section with greater diameter, called "cone", fitted with a coupling element at its free end.

5. Process according to Claim 4, where the cone is provided with an opening along a section of circumference for possible insertion of another leaf.

6. Process according to claims 4 and 5, where the surface of the cone is sand-blasted or shagreened.

7. Process according to any of the above claims, where a reinforcement wire is incorporated in the stem and cone.

8. Device for implementing the process according to any of the above claims, including an injection machine and composite mould, characterized by the fact that the mould reproduces the negative impression of the stem

- 8 -

with relevant branchings and the end section with larger diameter or cone, and is fitted with holes connected to a suction circuit to exercise a whirlpool effect in the mould, during the injection phase, preferably corresponding to the section relating to the edge or blade of the leaf.

9. Device as per Claim 8, characterized by the fact that the mould is formed by two couples of male and female, separable and replaceable, of which one couple reproduces the negative impression of the stem with relevant branchings and the other couple the end section of such stem with larger diameter.

10. Device as per claim 9 where the internal surface of the mould destined to form the leaf-supporting stem and, preferably, the cone of such stem, is subjected to a superficial sand-blasting or shagreening treatment.

0 168 799

_Fig.1_

_Fig.2_

_Fig.3_

0 168 799

_Fig.4_

_Fig.5_